# EUROPÄISCHE PATENTSCHRIFT

(11) **EP 1 974 596 B1**
(45) Veröffentlichungstag und Bekanntmachung des Hinweises auf die Patenterteilung: **07.08.2013**
(21) Anmeldenummer: 07104889.6
(22) Anmeldetag: 26.03.2007
(51) Int. Cl.: A01C 5/06, A01C 7/20

(54) **Säscharanordnung**
Seed coulter assembly
Ensemble de soc semeur

(43) Veröffentlichungstag der Anmeldung: 01.10.2008
(73) Patentinhaber: Horsch Maschinen GmbH, 92421 Schwandorf (DE)
(72) Erfinder: Horsch, Philipp, 92421, Schwandorf (DE)
(74) Vertreter: Benninger, Johannes

(56) Entgegenhaltungen:
- DE-A1- 3 306 810
- US-A- 3 450 074
- US-A- 4 116 140
- US-A- 5 676 429
- US-A- 5 829 535
- US-B1- 6 389 999

## Beschreibung

Die vorliegende Erfindung betrifft eine Säscharanordnung mit den Merkmalen des Oberbegriffs des Anspruchs 1.

### Stand der Technik

Säschare werden zum Einbringen von Saatgut in den Ackerboden verwendet. Die Säschare werden dabei an eine Zugmaschine angekoppelt und von diesem über das Feld gezogen. Sie verteilen das Saatgut in den Säfurchen und verteilen anschlie-ßend die Erde über dem Saatgut, welche zusätzlich noch rückverfestigt werden muss.

Bei der Aussaat sind mehrere Faktoren von Bedeutung. Zum einen muss eine dem Saatgut und der Bodenbeschaffenheit angepasste optimale Sätiefe eingestellt werden und zum anderen muss die Erde über dem Saatgut leicht angedrückt werden.

Zum Ausbringen von Saatgut gibt es zahlreiche unterschiedliche Systeme. Eine bekannte Bauart weist eine Mehrzahl von nebeneinander angeordneten Scheibenscharen oder Zinkenscharen o. dgl. auf. Mittels einer Druckwalze kann der Boden anschließend eingeebnet werden. Bei Säkombinationen hat es sich zudem als sinnvoll erwiesen, eine Mehrzahl von nebeneinander angeordneten Druckrollen den Säscharen nachzuführen. Die Druckrollen bzw. -walzen, welche unterschiedliche Breiten, Durchmesser und Profilgeometrien aufweisen können, laufen dabei je nach Gerät exakt auf den Reihen oder aber daneben.

DE 103 47 142 A1 beschreibt hinter der Säschar angeordnete Rollen zur sicheren Tiefenführung, zum Schließen der Säfurchen und zum Andrücken des Saatguts, welche schräg zur Vertikalen einstellbar sind.

Die Führung von Schar-/ Druckrollenkombinationen erfolgt zum Teil durch schwingende Systeme. Beispielsweise beschreibt EP 17 23 842 A1 ein System bestehend aus einer an einem Scharhalter befestigten Säschar und einer an einem federnden elastischen Arm angeordneten Saatdruckrolle.

Weitere Säscharanordnungen sind aus US 6 389 999, US 3 450 074 oder US 4 116 140 bekannt.

### Beschreibung

Das Ziel der Erfindung besteht darin, eine Säscharmodul für enge Reihenabstände zu entwickeln, dass die Vorteile der herkömmlichen Tandemanordnung beinhaltet.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Die dargestellte Erfindung besteht aus einer Säscharanordnung aus Schar und Druckrolle mit einem Anschlag.

Die gezogene Säscharanordnung besteht aus mindestens einem erfindungsgemäßen Säscharmodul. Vorzugsweise werden mehrere/ eine Vielzahl von Scharsystemen nebeneinander an einem Rahmen befestigt. Dabei wird das Scharmodule über ein bewegliches Verbindungselement am Rahmen gelagert. Gemäß einem bevorzugten Ausführungsbeispiel wird das komplette Scharsystem über ein Drehgelenk und über eine mit Druck zu beaufschlagende Feder an einem Rahmen dreh- und schwenkbar gelagert. Die Beauschlagung der Feder mit Druck kann beispielsweise pneumatisch oder hydraulisch erfolgen.

An dem beweglichen Verbindungselement bzw. an der Feder und dem Drehgelenk befindet sich die Scharaufhängung, die eine Schareinheit trägt. Durch das Beaufschlagen der Feder mit Druck wird deren Länge verändert, was sich über die Scharaufhängung und über einen weiteren Drehpunkt auf die gesamte Schareinheit, bestehend aus Schar und Druckrolle, auswirkt. Durch die Verlängerung der Feder wird die gesamte Schareinheit nach unten und somit in den Boden gedrückt.

Die Schareinheit besteht aus Schar und Druckrolle. Die Schar befindet sich an einem Schartragarm, der über ein weiteres dreh- oder schwenkbewegliches Verbindungselement, beispielsweise ein Drehgelenk, an der Scharaufhängung befestigt ist. Die Druckrolle kann ebenfalls am Schartragarm, oder aber an einem separaten Druckrollenarm angebracht sein, der fest oder beweglich mit dem Schartragarm verbunden ist. Bei einer beweglichen Befestigung eines separaten Druckrollenarmes kann die Einstellung des Druckrades beliebig, entsprechend der Bedingungen des Untergrunds, angepasst werden.

Der Drehpunkt für die Aufhängung des Scharsystems kann im Vergleich zu Schwingenanordnungen wesentlich näher zu der Scheibe positioniert werden, wodurch die Veränderung der Sätiefe bei unebenen Bodenverhältnissen gering, gleichzeitig jedoch die Möglichkeit nach oben bzw. unten auszuweichen sehr groß gehalten wird.

Weiterhin weist das Scharmodul einen Anschlag auf, der ebenfalls mit der Scharaufhängung und / oder gemäß einer weiteren Ausführungsform mit dem Schararm verbunden ist. Dieser Anschlag wirkt mit dem Schararm zusammen, und bestimmt somit die Sätiefe. Beispielsweise liegt der Anschlag auf dem Schararm auf und begrenzt dadurch die maximale Eintauchtiefe der Schar.

Der Anschlag kann hierbei fest voreingestellt sein. Gemäß einer weiteren bevorzugten Ausführungsform ist der Anschlag verstellbar und kann individuell an die Bodengegebenheiten angepasst werden.

Gemäß einer bevorzugten Ausführungsform ist das drehbewegliche bzw. schwenkbewegliche Verbindungselement zur Verbindung des Schartragarmes mit der Scharaufhängung hinter der Schar angebracht ist, so dass die Schar in Fahrtrichtung geschoben wird. Als bewegliches Verbindungselement kann hierbei jedes bekannte für diese Funktion geeignete Verbindungselement, beispielsweise eine Blattfeder oder ein Drehgelenk verwendet werden. Da die Schar geschoben wird, ist das Eindringen in harten Boden erleichtert. Ansonsten wirkt diese Anordnung wie ein Schwingensystem mit nachlaufender Druckrolle zur Rückverfestigung bzw. Tiefenführung.

Die notwendige Kraft, die benötigt wird, damit das Schar in den Boden eindringen kann ist sehr gering, da das Schar geschoben wird. Dadurch wird automatisch ein Teil der Schubkraft in eine Kraft nach unten (zum Eindringen) umgewandelt und wirkt zusätzlich zur vorhandenen Federkraft. Dies reduziert sowohl die Druckbelastung (Federkraft), als auch das Maschinengewicht, ohne dass die Eindringfähigkeit bei schwierigen Bodenverhältnissen reduziert wird.

Bei einer Anordnung ohne Anschlag besteht die Gefahr, dass bei leichten Bodenverhältnissen das Schar zum Eintauchen neigt, wobei es leicht zum Stillstand kommen kann, was zu Verstopfungen führt. Durch die Tiefenbegrenzung der Schar über den Anschlag wird der Stillstand vermieden.

Das vorliegende System benötigt weiterhin kein zusätzliches System zur Tiefenführung, da dies ebenfalls durch die Begrenzung der Säschar erfolgt.

Bei einer alternativen Ausführungsform ist das drehbewegliche bzw. schwenkbewegliche Verbindungselement zur Verbindung des Schartragarmes mit der Scharaufhängung oberhalb, neben oder vor der Schar angebracht, so dass je nach resultierender räumlicher Anordnung der einzelnen Bauteile die Schar als in Fahrtrichtung gezogene Schar angesehen werden kann. Als bewegliches Verbindungselement kann hierbei wiederum jedes bekannte für diese Funktion geeignete Verbindungselement, beispielsweise eine Blattfeder oder ein Drehgelenk verwendet werden.

Als bewegliches Verbindungselement (erstes Verbindungselement) zwischen dem Rahmen und der Scharaufhängung wird beispielsweise ein Drehgelenk verwendet, über das die Scharaufhängung sowohl am Rahmen als auch an einer am Rahmen angebrachten Druckfeder (zweites Verbindungselement) beweglich befestigt ist. Vorzugsweise ist der Abstand zwischen dem ersten beweglichen Verbindungselement und der Schar relativ klein.

Anstelle des ersten und / oder des zweiten beweglichen Verbindungselements können beispielsweise Gummifederelemente verwendet werden. Ist das erste Verbindungselement beispielsweise eine Blattfeder aus Stahl, Fiberglas, GFK, CFK o.ä. so kann auf das zweite bewegliche Verbindungselement verzichtet werden.

Das erste bewegliche Verbindungselement kann sich in relativ geringem Abstand zur Schar befinden. Es kann hierbei vor, hinter oder über dem Scharmittelpunkt angeordnet sein, wobei die Ausführungsform, bei dem das erste Verbindungselement vor dem Scharmittelpunkt angeordnet ist, bevorzugt wird.

Die Druckrolle kann bei dem beschriebenen Säscharmodul hinter der Schar in einer fluchtenden Linie verlaufen, so dass die Druckrolle direkt auf der Saatreihe verläuft. Alternativ kann die Druckrolle auch versetzt angeordnet sein, so dass sie neben der Saatreihe verläuft.

Eine gezogene Säscharanordnung weist im Allgemeinen eine Vielzahl von nebeneinander an einem Rahmen angeordneten Säscharsystemen auf, wobei auch Ausführungsformen mit nur einem oder einer geringen Anzahl von Scharmodulen denkbar sind.

Die verwendeten Säscharsysteme können verschieden lang ausgeführt sein, um eine möglichst optimale Platzausnutzung zu erreichen. Beispielsweise können Säscharmodule mit unterschiedlich langer Scharaufhängung verwendet werden, damit die nebeneinander angeordneten Säscharsysteme unterschiedlich weit vom Rahmen entfernt sind. Weiterhin können die beweglichen Verbindungselemente zwischen Rahmen und Scharaufhängung verschieden weit von der Säschar und / oder dem Rahmen entfernt sein.

Die Zuleitung des Saatguts zur Säschar, welche zum Beispiel die Form einer Einzelscheibenschar, Doppelscheibenschar, Zinkenschar oder einer Sichelschar haben kann, erfolgt beispielsweise durch eine pneumatisch arbeitende Verteilmaschine. Das Saatgut befindet sich in einem Vorratsbehälter und wird über ein Dosierorgan an einen Verteiler weitergeleitet, der das Saatgut der Säschar zuführt.

Mit dem erfindungsgemäßen Scharsystem kann in wesentlich schwereren bzw. härteren Bodenbedingungen gesät werden als es normalerweise mit einer Schwingenanordnung möglich wäre, wobei das Maschinengewicht und daraus resultierend die Schardruckvorspannung nicht erhöht werden müssen.

Das vorliegend beschriebene Scharsystem mit Anschlag hat auch den Vorteil, dass die Schareinheit ruhiger über unebenen Untergrund läuft als eine Schwingenanordnung.

### Figurenbeschreibung

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1: zeigt eine seitliche Darstellung eines kompletten Scharsystems;

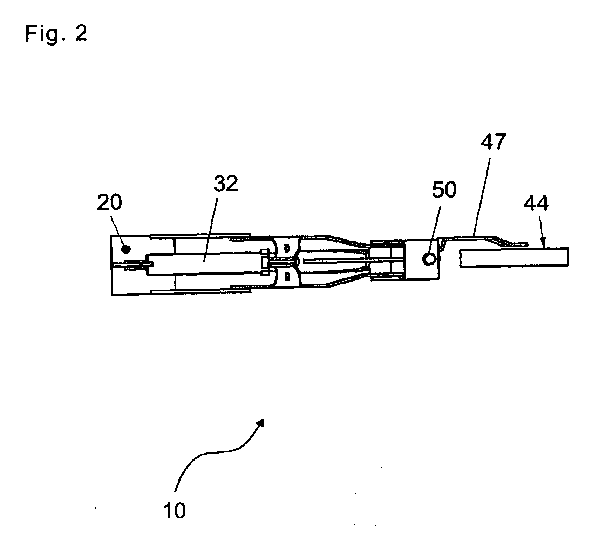

- Fig. 2: zeigt eine Darstellung eines kompletten Scharsystems von oben und

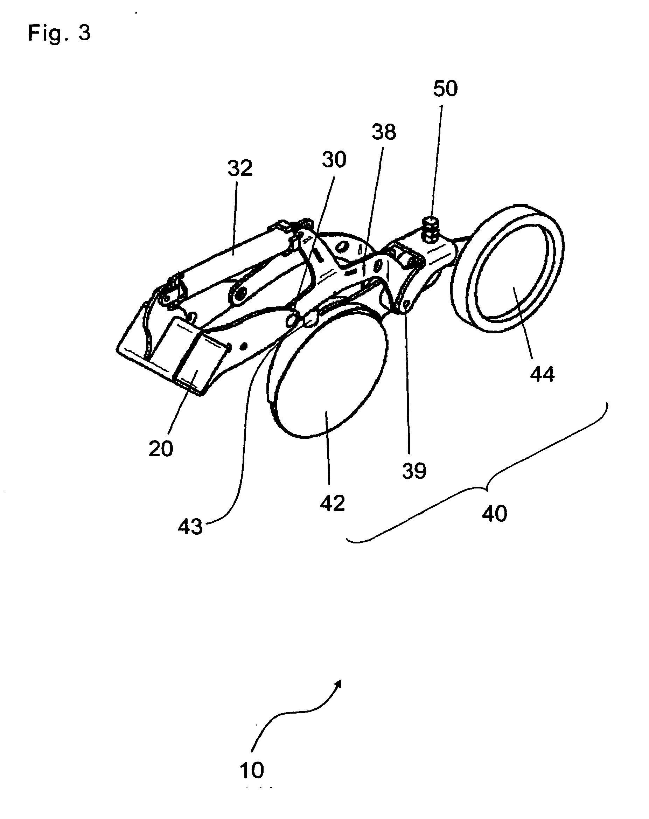

- Fig. 3: zeigt eine Darstellung eines kompletten Scharsystems schräg von vorn.

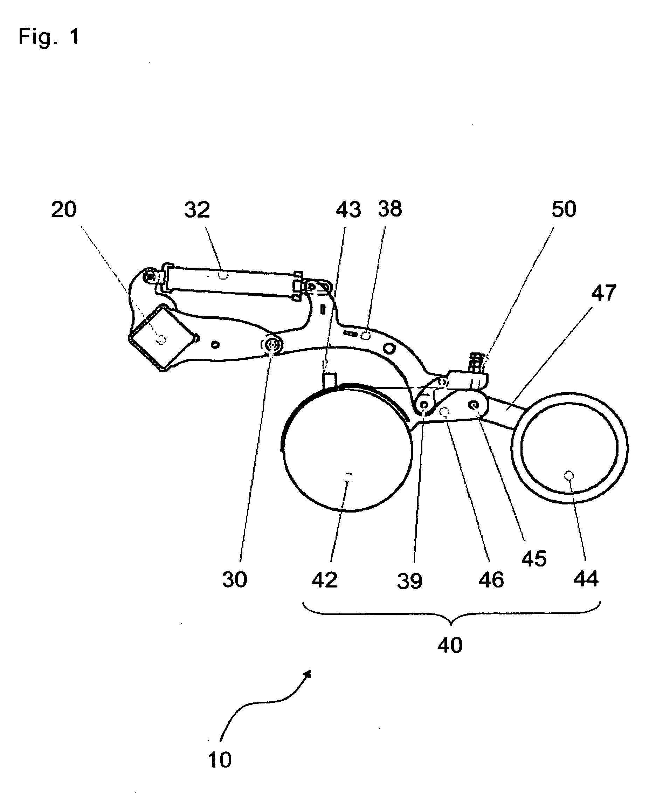

Eine mögliche Ausgestaltung eines erfindungsgemäßen Scharsystems 10, dass wie eine Tandemanordnung wirkt, wird anhand von Figur 1 illustriert.

Das komplette Scharsystem 10 ist durch ein Drehgelenk 30 an einem Rahmen 20 drehbar gelagert und wird über eine Feder 32 mit Druck beaufschlagt. Dies kann beispielsweise pneumatisch oder hydraulisch erfolgen. Vorzugsweise werden mehrere/eine Vielzahl von Scharsystemen 10 nebeneinander am Rahmen 20 befestigt.

An der Feder 32 und dem Drehgelenk 30 befindet sich die Scharaufhängung, die die Schareinheit 40 trägt. Durch das Beaufschlagen der Feder 32 mit Druck wird deren Länge verändert, was sich über die Scharaufhängung 38 und über den Drehpunkt der Schareinheit 39 auf die gesamte Schareinheit 40 auswirkt. Und zwar wird durch Verlängerung der Feder 32 die gesamte Schareinheit 40 nach unten und somit in den Boden gedrückt.

Die Schareinheit 40, bestehend aus Schar 42 mit Schartragarm 46 und Druckrolle 44 mit Druckrollentragarm 47, ist über die Scharaufhängung 38 mit dem Schartragarm 46 verbunden. Die Scharaufhängung 38 und der Schartragarm 46 sind dabei im Verbindungselement 39 drehbar gelagert. Diese bewegliche Lagerung ermöglicht ein variables Einstellen, entsprechend den vorliegenden Bodenverhältnissen. Der Druckrollentragarm 47 ist über das Verbindungselement 45 am Schartragarm 46 befestigt. Das Verbindungselement kann starr oder beweglich ausgeführt sein, so dass eine Verstellung der Druckrolle bezüglich der Schareinheit möglich ist.

An Drehpunkt der Schareinheit 39 ist weiterhin ein Anschlag 50 befestigt. Unter normalen Bedingungen liegt dieser Anschlag 50 auf dem Schartragarm 46 auf. Somit stützt sich die Schareinheit 40 über den Anschlag 50 auf die Druckrolle 44 ab, wodurch die genaue Sätiefe für das Schar 42 geführt wird.

Sobald das Schar 42 nicht mehr in den Boden eindringen kann, weil dieser zu hart ist, bzw. der Schardruck zu gering, wird die Schar 42 nach oben gedrückt. Aufgrund der drehbaren Lagerung im Verbindungselement 39 bewegt sich das der Schar 42 entgegen gesetzte Ende des Schartragarmes 46, auf dem normalerweise der Anschlag 50 aufliegt, nach unten. Dadurch entfernt sich die Schareinheit 40 vom Anschlag 50, so dass dessen Wirkung entfällt. Dadurch wirkt die Schareinheit 40 wie eine um einen Drehpunkt 39 "frei schwingende" Tandemanordnung mit dem Vorteil, dass das geschobene Schar 42, unter anderem bedingt durch Ihr Eigengewicht, wieder sofort mit erhöhter Kraft in den harten Boden eindringen möchte.

Sobald das Schar 42 wieder seine Sätiefe erreicht hat, liegt der Anschlag 50 wieder an der Schareinheit 40 an, wodurch die Sätiefe exakt eingehalten wird. Die Einstellung der Sätiefe erfolgt hierbei über die Verstellung des Anschlages 50. Eine aufwendige Tiefenführung über seitliche Tiefenführungsrollen entfällt demnach komplett.

Der Drehpunkt 30 für die Aufhängung des Scharsystems kann im Vergleich zu Schwingenanordnungen wesentlich näher zu der Schar 42 positioniert werden, wodurch die Veränderung der Sätiefe bei unebenen Bodenverhältnissen gering, gleichzeitig jedoch die Möglichkeit nach oben bzw. unten auszuweichen sehr groß gehalten wird.

Die Zuleitung des Saatguts zur Säschar 42, welche zum Beispiel die Form einer Einzelscheibenschar, Doppelscheibenschar, Zinkenschar oder einer Sichelschar haben kann, erfolgt beispielsweise über eine Saatgutzuführung 43 durch eine pneumatisch arbeitende Verteilmaschine. Das Saatgut befindet sich in einem Vorratsbehälter und wird über ein Dosierorgan an einen Verteiler weitergeleitet, der das Saatgut der Säschar 42 zuführt.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich wie in den Ansprüchen definiert fallen.

### Bezugszeichenliste

- 10: komplettes Scharsystem /Scharmodul
- 20: Rahmen
- 30: Drehgelenk
- 32: Feder für Schardruckeinstellung
- 38: Scharaufhängung
- 39: Drehpunkt Schareinheit
- 40: Schareinheit
- 42: Schar
- 43: Saatrohr / Saatgutzuführung
- 44: Druckrolle
- 45: Verbindung Schareinheit - Druckrolle / Verbindungselement
- 46: Schartragarm
- 47: Druckrollentragarm
- 50: Anschlag

## Patentansprüche

1. Gezogene Säscharanordnung zum Ausbringen von Saatgut, mit mindestens einem, an einem Rahmen (20) befestigten Säscharmodul (10), wobei das Säscharmodul (10) wenigstens eine Scharaufhängung (38) umfasst, die mittels eines beweglichen, drehbar gelagerten und über eine pneumatische oder hydraulische Feder (32) mit Druck beaufschlagten Drehgelenks (30) am Rahmen (20) befestigt ist, so dass durch Druckbeaufschlagung der Feder (32) die gesamte Schareinheit (40) nach unten in den Boden gedrückt wird, und wobei das Säscharmodul (10) ein drehbewegliches bzw. schwenkbewegliches Verbindungselement (39) zur Aufhängung eines Schartragarmes (46) an der Scharaufhängung (38) aufweist, die oberhalb oder vor der Schar (42) angebracht ist, wobei der schwenkbeweglich gelagerte Schartragarm (46) eine Säschar (42), eine daran gekoppelte Druckrolle (44) und einen verstellbaren Anschlag (50) aufweist, wobei der Anschlag (50) mit dem Schartragarm (46) zusammenwirkt und die Sätiefe mitbestimmt oder einstellt, indem der Anschlag (50) an der Schareinheit (40) anliegt, sobald das Schar (42) seine Sätiefe erreicht hat.

2. Gezogene Säscharanordnung nach dem vorangehenden Anspruch, wobei sich ein bewegliches Verbindungselement (30), in geringem Abstand zur Schar (42) befindet.

3. Gezogene Säscharanordnung nach einem der vorangehenden Ansprüche, wobei der Anschlag (50) verstellbar ausgeführt ist.

4. Gezogene Säscharanordnung nach einem der vorangehenden Ansprüche, wobei die an einem Tragarm (47) befestigte Druckrolle (44) relativ zur Säschar (42) verstellbar ist.

5. Gezogene Säscharanordnung nach einem der vorangehenden Ansprüche, wobei die Druckrolle (44) auf oder neben der Saatreihe läuft.

6. Gezogene Säscharanordnung nach einem der vorangehenden Ansprüche, wobei verschiedene Säscharmodule (10) mit unterschiedlich langen Scharaufhängungen (38) und / oder beweglichen Verbindungselementen (30), die unterschiedlich weit vom Rahmen (20) entfernt sein, nebeneinander angeordnet sind.

7. Gezogene Säscharanordnung nach einem der vorangehenden Ansprüche, wobei die Schar (42) eine Doppelscheibe, eine Einzelscheibe, Zinkenschar, Schleppschar oder eine Sichelschar ist.

## Claims

1. A towed sowing coulter arrangement for sowing seed, having at least one sowing coulter module (10) fastened to a frame (20), wherein the sowing coulter module (10) comprises at least one coulter mounting (38), which is fastened to the frame (20) by means of a movable, rotatably journaled pivot joint (30), which is pressure-impinged by means of a pneumatic or hydraulic spring (32) in such a manner that the pressure on the spring (32) presses the entire coulter unit (40) downward into the soil, and wherein the sowing coulter module (10) further comprises a rotatably or pivotably movable connecting element (39) for mounting a coulter support arm (46) to the coulter mounting (38), which is arranged above the coulter (42), and wherein the pivotably journaled coulter support arm (46) comprises a sowing coulter (42) with a pressure roller (44) coupled to it and an adjustable stop (50) wherein the stop (50) interacts with the coulter support arm (46) to take a part in regulating or adjusting sowing depth by the coulter unit (40) and the stop (50) coming into contact with each other as soon as the coulter (42) has reached the proper sowing depth.

2. A towed sowing coulter arrangement according to the previous claim wherein a movable connecting element (30) is arranged at a close distance from the coulter (42).

3. A towed sowing coulter arrangement according to one of the previous claims wherein the stop (50) is designed to be adjustable.

4. A towed sowing coulter arrangement according to one of the previous claims wherein the pressure roller (44) is adjustable relative to the sowing coulter (42).

5. A towed sowing coulter arrangement according to one of the previous claims wherein the pressure roller (44) runs on or next to the seed row.

6. A towed sowing coulter arrangement according to one of the previous claims wherein several sowing coulter modules (10) are arranged adjacent to each other by means of coulter mountings (38) of different lengths and/or by means of movable connecting elements (30), which are arranged differently spaced from the frame (20).

7. A towed sowing coulter arrangement according to one of the previous claims wherein the coulter (42) is designed as a double-disc coulter, a single-disc coulter, a tine coulter, a shoe-tight opener or a blade coulter.

## Revendications

1. Ensemble de soc semeur tracté destiné à l'épandage de semences, comprenant au moins un module de soc semeur (10) qui est fixé sur un châssis (20), ledit module de soc semeur (10) comprenant au moins une suspension de soc (38) qui est fixée sur ledit châssis (20) par l'intermédiaire d'une articulation tournante (30) mobile logée à rotation et maintenue en pression via un ressort pneumatique ou hydraulique (32), de sorte que, en mettant en pression ledit ressort (32), l'ensemble de l'unité de soc (40) est poussé vers le bas dans le sol, et ledit module de soc semeur (10) comprenant un élément de liaison (39) mobile en rotation ou bien mobile en pivotement qui est destiné à suspendre un bras support de soc (46) sur la ladite suspension de soc (38) qui est montée au-dessus de ou devant le soc (42), ledit bras support de soc (46) logé mobile en pivotement comprenant un soc semeur (42), un rouleau presseur (44) couplé à celui-ci et une butée (50) réglable, ladite butée (50) agissant de concert avec ledit bras support de soc (46) et participant à déterminer ou réglant la profondeur de semailles par le fait que la butée (50) s'applique contre ladite unité de soc (40) dès que le soc (42) a atteint sa profondeur de semailles.

2. Ensemble de soc semeur tracté selon la revendication précédente, dans lequel un élément de liaison (30) mobile est situé à faible distance du soc (42).

3. Ensemble de soc semeur tracté selon l'une quelconque des revendications précédentes, dans lequel ladite butée (50) est réalisée de manière à être réglable.

4. Ensemble de soc semeur tracté selon l'une quelconque des revendications précédentes, dans lequel ledit rouleau presseur (44) fixé sur un bras support (47) est réglable par rapport au soc semeur (42).

5. Ensemble de soc semeur tracté selon l'une quelconque des revendications précédentes, dans lequel ledit rouleau presseur (44) roule sur ou à côté de la ligne de semis.

6. Ensemble de soc semeur tracté selon l'une quelconque des revendications précédentes, dans lequel des modules de soc semeur (10) différents comprenant des suspensions de soc (38) à longueurs différentes et/ou des éléments de liaison mobiles (30) situés à distances différentes dudit châssis (20) sont disposés les uns à côté des autres.

7. Ensemble de soc semeur tracté selon l'une quelconque des revendications précédentes, dans lequel ledit soc (42) est un double disque, un disque unique, un soc-fourche, un soc traînant ou un soc-faucille.
